# EUROPEAN PATENT SPECIFICATION

(11) **EP 2 602 459 B1**
(45) Date of publication and mention of the grant of the patent: **04.09.2019**
(21) Application number: 11814484.9
(22) Date of filing: 26.07.2011
(51) Int. Cl.: F02D 19/02, F02D 17/00, F02D 43/00, F02D 45/00, F02D 41/00, F02D 41/04

(54) **SCAVENGING OPERATION METHOD FOR GAS ENGINE**
SPÜLVORGANGSVERFAHREN FÜR EINEN GASMOTOR
PROCÉDÉ D'EXÉCUTION DU BALAYAGE POUR MOTEUR À GAZ

(30) Priority: 05.08.2010 JP 2010176167
(43) Date of publication of application: 12.06.2013
(73) Proprietor: Yanmar Co., Ltd., Osaka-shi, Osaka 530-8311 (JP)
(72) Inventor: HAGIWARA, Ryoichi, Osaka-shi Osaka 530-8311 (JP); NAKAZONO, Toru, Osaka-shi Osaka 530-8311 (JP); OTSUBO, Hiroyuki, Osaka-shi Osaka 530-8311 (JP)
(74) Representative: Boult Wade Tennant LLP
(86) International application number: PCT/JP2011/066899
(87) International publication number: WO 2012/017856

(56) References cited:
- EP-A2- 1 236 602
- JP-A- 5 321 689
- JP-A- H0 450 415
- JP-A- H01 280 640
- JP-A- H03 242 466
- JP-A- H05 321 689
- JP-A- S58 140 474
- JP-A- 2002 256 919
- JP-A- 2004 108 212
- JP-A- 2006 233 915
- JP-A- 2008 157 127
- JP-A- 2009 002 164
- JP-A- 2009 057 870
- US-A1- 2002 043 243
- US-A1- 2003 213 454
- US-B1- 6 195 985

## Description

### [Technical Field]

The present invention relates to a scavenging operation method for a gas engine after an engine stop instruction, and more particularly, to a scavenging operation method suitable for a biomass gasification fuel gas engine after an engine stop instruction.

### [Background Art]

A gas engine is started as follows. A starter motor is operated to crank the engine, and according to the cranking of the engine, fuel is supplied into a combustion chamber and a spark plug is operated to start the engine.

However, if the engine fails to start, since the fuel/air ratio of a mixture gas remaining in the combustion chamber becomes too high, it is difficult to ignite the mixture gas, and the spark plug is wet by liquid fuel, thereby making it more difficult to start the engine again. As a countermeasure for such start failure, a scavenging operation is performed in the related art as is illustrated in PTLs 1 and 2. In the scavenging operation, if such start failure occurs, the degree of opening of a throttle valve is set to a predetermined value or more, and cranking is carried out in a state where supply of fuel is stopped. In this way, unburned fuel remaining in the combustion chamber is discharged from a cylinder, and thus the next starting can be guaranteed more reliably.

### [Citation List]

### [Patent Literatures]

Known prior art includes JP 2000-265880 A and JP 10-331691 A. In addition, US 6,195,985 describes a method for reducing the pollutant emissions of an internal combustion engine using a scavenging method during which a fuel control valve is closed in response to a stop instruction for the engine and a throttle valve is opened while the engine speed decreases after the stop instruction. JP H01 280640 describes a throttle valve adhesion preventing method for a gas engine mixer. US 2002/043243 and US 2003/213454 disclose systems for maintaining throttle valves open after an engine stop instruction in order to scavenge the engine. JP H05 321689 describes another scavenge method for a gas engine. JP H03 242446 describes an ignition control method for an engine. JP S58 140474 describes a control device for a gas engine. JP H04 50415 describes another scavenging method. EP 1236602 describes a hybrid vehicle control apparatus with exhaust gas purification.

### [Summary of Invention]

### [Technical Problem]

Recently, power generation systems are being developed, in which gas fuel obtained by thermally decomposing substances such as sawdust in a gasification furnace, gas fuel discharged from garbage disposal facilities, biomass gas fuel obtained from biological excrement or the like, or gas fuel gushing from reclaimed land is used to operate a gas engine and thus to operate a power generation apparatus using the gas engine.

In the gas engine included in such a power generation system, a large amount of moisture of contaminants remains in a cylinder of the engine after the engine is stopped, and thus a spark plug or a cylinder liner may rust or corrode to decrease the durability of the engine.

Therefore, the present invention is directed to prevent a spark plug or a cylinder liner from rusting or corroding by removing moisture or the like from a cylinder after an engine stop instruction.

### [Solution to Problem]

The present invention provides a scavenging operation method for a gas engine including: a fuel control valve that controls a supply amount of fuel gas; a throttle valve that controls a supply amount of a mixture gas of fuel gas and air; and a control unit, the scavenging operation method including: causing the control unit to close the fuel control valve in response to a stop instruction for stopping the gas engine; and while engine speed of the gas engine decreases after the stop instruction, causing the control unit to open the throttle valve to a predetermined degree of opening or greater, wherein the gas engine includes a starter motor, and after the gas engine stops rotating, the scavenging operation method includes: causing the control unit to open the throttle valve to the predetermined degree of opening or greater while the control unit keeps the fuel control valve closed; and cranking the gas engine using the starter motor, and the scavenging operation method includes causing the control unit to send an ignition instruction to the spark plug while the gas engine is cranked by the starter motor.

According to the above-described configuration, while the engine speed of the gas engine decreases after the stop instruction, since throttle valve is opened to the predetermined degree of opening or greater in a state where the fuel control valve is closed, only air is supplied from the throttle valve, and the air removes moisture from the inside of a cylinder. As a result, a spark plug or a cylinder liner inside the cylinder can be prevented from rusting or corroding.

Even after the engine stops rotating, the engine can be cranked by the starter motor, and moisture can be removed from the inside of the cylinder with air supplied from the throttle valve. As a result, the spark plug or the cylinder liner inside the cylinder can be prevented from rusting or corroding more reliably.

Since an ignition instruction is sent to the spark plug even while the engine is cranked by the starter motor, fuel remaining around the spark plug can be burned. As a result, the spark plug can be prevented from being stained more reliably.

In addition, it may be preferable that the present invention has the following configurations as set out in the dependent claims.
(1) The gas engine includes a spark plug to ignite the mixture gas in a cylinder, and the scavenging operation method includes causing the control unit to send an ignition instruction to the spark plug while the engine speed of the gas engine decreases after the stop instruction.
(2). The scavenging operation method includes causing the control unit to keep the throttle valve open after the gas engine is cranked by the starter motor.

According to the configuration (1), fuel remaining around the spark plug can be burned by sending an ignition instruction to the spark plug, and thus the spark plug can be prevented from being stained.

According to the configuration (2), since the throttle valve is opened even when the engine is not operated, sticking of the throttle valve can be prevented.

### [Advantageous Effects of Invention]

Therefore, according to the present invention, the spark plug or the cylinder liner inside the cylinder can be prevented from rusting or corroding.

### [Brief Description of Drawings]

Fig. 1 is a block diagram schematically showing a gasification power generation system including a gas engine for carrying out the present invention.
Fig. 2 is a configuration diagram showing the gas engine of Fig. 1.
Fig. 3 is a time chart showing engine speed, opening degree of throttle valve, opening degree of fuel control valve, ignition signal, and operational state of solenoid valve according to an example of a scavenging operation method not part of the present invention.
Fig. 4 is a time chart showing a scavenging operation method according to an embodiment of the present invention.
Fig. 5 is a configuration diagram of a gas engine including an injector as a fuel gas supply device.

### [Description of Embodiments]

### [Structure of Biomass Gasification Power Generation System]

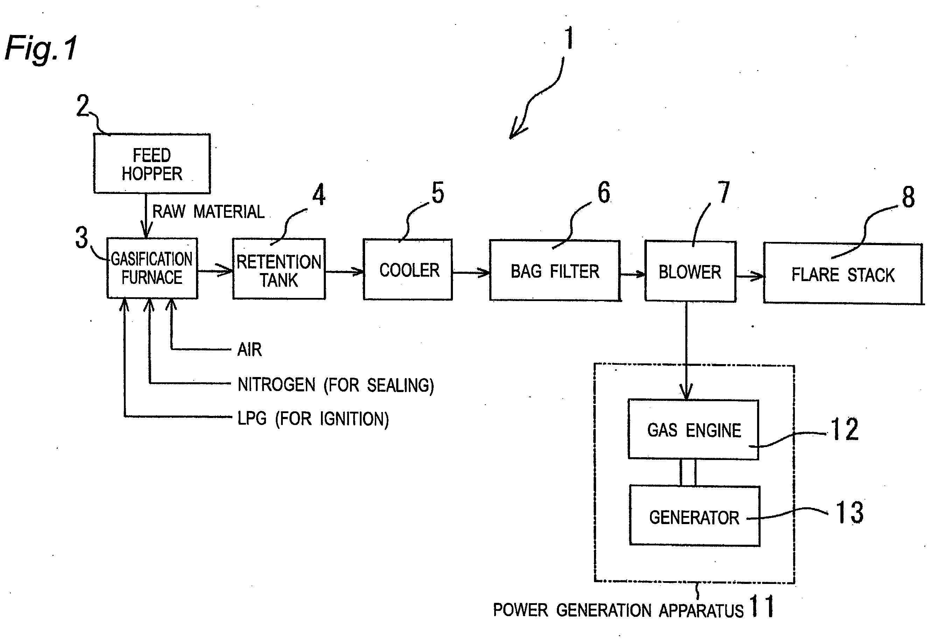

Fig. 1 illustrates a biomass gasification power generation system 1 including a gas engine to which a scavenging operation method of the present invention is applicable. The biomass gasification power generation system 1 includes: a feed hopper 2 for feeding a woody biomass raw material such as sawdust; a gasification furnace 3 in which the biomass raw material is heated to generate pyrolysis gas; a retention tank 4 in which the pyrolysis gas generated is temporarily retained for removing tar and the like by decomposition; a cooler 5 in which the pyrolysis gas from which tar and the like is removed is cooled; a bag filter 6 for removing dust from the cooled pyrolysis gas; and a blower 7 for feeding the dust-removed pyrolysis gas to the gas engine 12 of a power generation apparatus 11 as a combustion gas. The power generation apparatus 11 includes the gas engine 12 and a generator 13 connected to an output shaft of the gas engine 12. A flare stack 8 is also connected to the blower 7 for discharging pyrolysis gas when the power generation apparatus 11 is not operated. The gasification furnace 3 is supplied with air, furnace building for sealing, LPG for ignition, and the like, as well as the raw material described above.

The biomass gasification power generation system 1 is configured to provide electricity using the generator 13, hot water heated with waste heat of exhaust gas of the engine 12, and so on. A dual-fuel engine power generation method is used for the power generation apparatus 11.

### [Structure of Gas Engine]

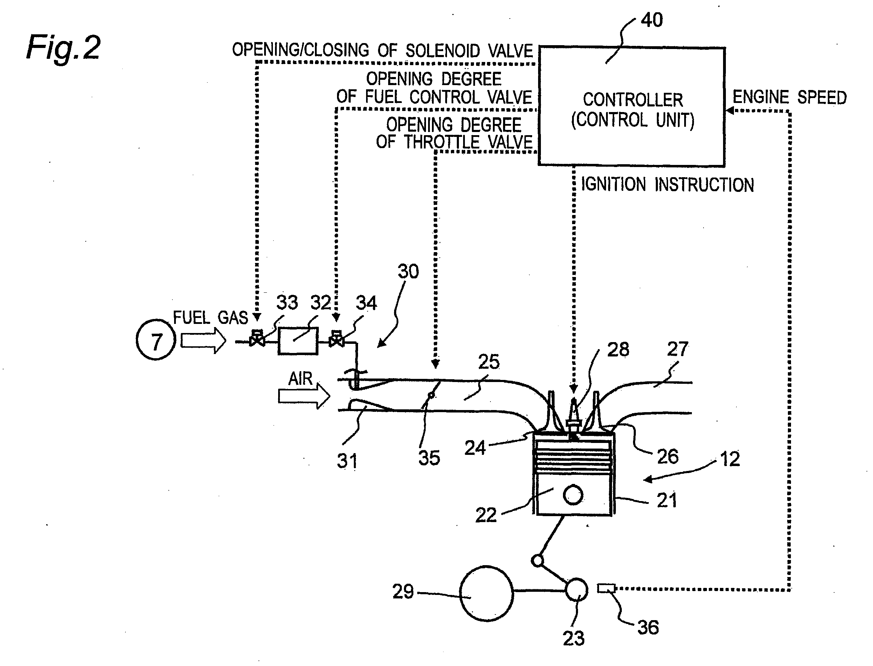

Fig. 2 illustrates the gas engine 12 which is a 4-cycle engine disposed in the power generation apparatus 11 of Fig. 1. As known in the related art, the engine 12 includes a cylinder 21, a piston 22, a crankshaft 23, an intake valve 24, an intake path 25, an exhaust valve 26, an exhaust path 27, a spark plug 28, and a starter motor 29. A fuel gas supply device 30 is a mixer type device including: a venturi mixer 31 disposed in the intake path 25; a solenoid valve 33 for supplying fuel gas blown from the blower 7 to a regulator 32; and a fuel control valve 34 for supplying fuel gas stored in the regulator 32 to the venturi mixer 31, wherein a throttle valve 35 is disposed at the intake downstream side of the venturi mixer 31 for controlling the flow rate of a mixture gas of air and fuel gas. In addition, an engine speed sensor 36 is disposed at the crankshaft 23 for detecting the rotation speed of the crankshaft, that is, the engine speed of the engine.

The spark plug 28, the solenoid valve 33, the fuel control valve 34, the throttle valve 35, and the engine speed sensor 36 are electrically connected to a controller (control unit) 40, wherein if an RPM detection signal is input from the engine speed sensor 36, the controller 40 at least sends an ignition instruction signal to the spark plug 28 and an opening/closing signal to the solenoid valve 33, and then opening degree instruction signals to the fuel control valve 34 and the throttle valve 35 for controlling the opening degrees thereof.

### [Scavenging Operation Method for Gas Engine]

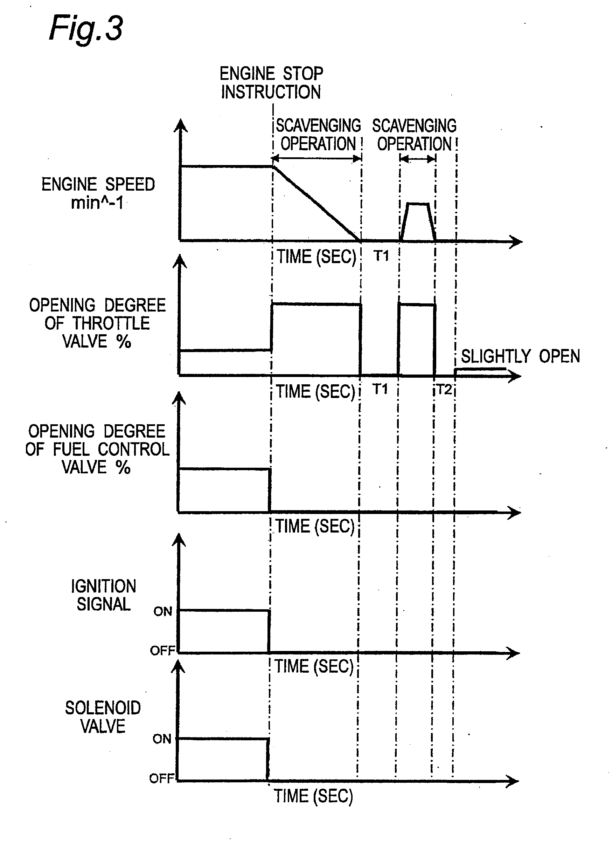

Fig. 3 is a time chart illustrating an example of a scavenging operation method not part of the present invention, in which horizontal axes represent time (sec), and vertical axes indicate, from top to bottom, change in engine speed, change in opening degree of throttle valve, change in opening degree of fuel control valve, ON/OFF of ignition signal, and ON/OFF of solenoid valve.

If a stop instruction is input to stop the engine 12, the controller 40 closes the solenoid valve 33 and the fuel control valve 34 for stopping fuel gas supply to the inside of the cylinder 21. In addition, the controller 40 does not send an ignition instruction to the spark plug 28. Then, after the stop instruction, the engine speed of the engine 12 reduces (the engine 12 starts to idle). Along with this, the controller 40 opens the throttle valve 35 to a predetermined degree of opening or greater. As a result, since the engine 12 is idling, only air is supplied into the cylinder 21 from the throttle valve 35.

Thereafter, if the engine speed reaches zero, the controller 40 closes the throttle valve 35.

After a time period (T1) from the time point when the engine speed reaches zero and the throttle valve 35 is closed, the engine 12 is cranked by the starter motor 29 (the engine 12 is rotated), and at the same time the controller 40 opens the throttle valve 35 to the predetermined degree of opening or greater.

After the engine 12 is cranked by the starter motor 29 (if the engine speed reaches zero), the controller 40 closes the throttle valve 35.

After a time period (T2) from the time point when the throttle valve 35 is closed after the engine 12 is cranked, the controller 40 opens the throttle valve 35 to a degree of opening smaller than the predetermined degree of opening.

According to the scavenging operation method, the following effects can be attained.

While the engine speed decreases after a stop instruction is input to stop the engine 12, since the throttle valve 35 is opened at a predetermined degree of opening or greater in a state where the solenoid valve 33 and the fuel control valve 34 are closed, supply of fuel gas is stopped, and only air is supplied into the cylinder 21 from the throttle valve 35 to remove moisture from the cylinder 21. As a result, the spark plug 28 or a cylinder liner inside the cylinder 21 can be prevented from rusting or corroding.

After the engine stops rotating, since the engine 12 is cranked by the starter motor 29 to remove moisture from the inside of the cylinder 21 with air supplied from the throttle valve 35, the spark plug 28 or the cylinder liner inside the cylinder 21 can be prevented from rusting or corroding more reliably.

While the engine 12 is not operated after the engine 12 is cranked by the starter motor 29, since the throttle valve 35 is opened, sticking of the throttle valve 35 can be prevented.

It is preferable that the predetermined degree of opening of the throttle valve 35 is full opening (100%). In addition, the degree of opening of the throttle valve 35 after cranking may be determined so that a gap can be formed between the throttle valve 35 and the intake path 25. For example, the degree of opening of the throttle valve 35 after cranking may be several percents (%).

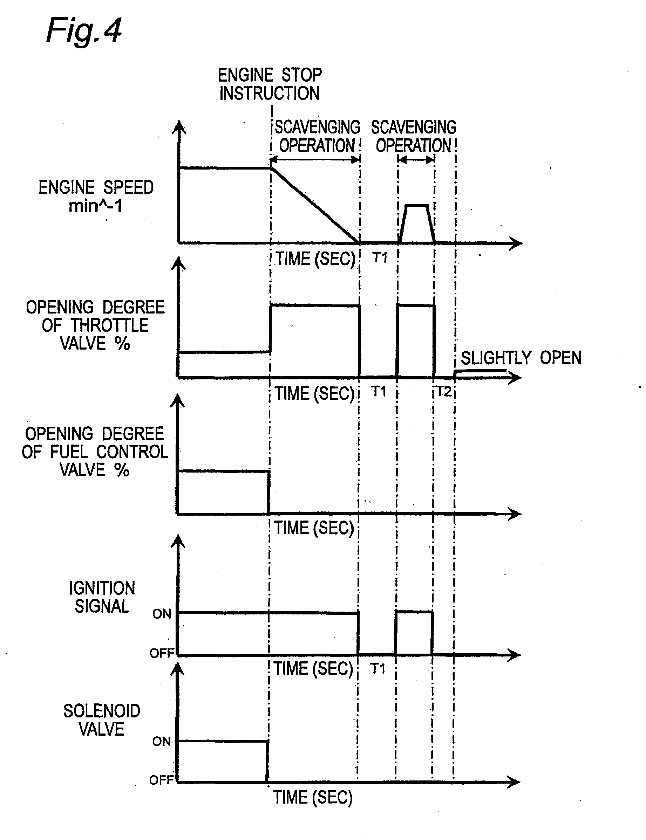

Fig. 4 is a time chart illustrating a scavenging operation method according to an embodiment of the present invention, in which horizontal axes represent time (sec), and vertical axes indicate, from top to bottom, change in engine speed, change in opening degree of throttle valve, change in opening degree of fuel control valve, ON/OFF of ignition signal, and ON/OFF of solenoid valve. The current embodiment is the same as the scavenging operation method illustrated in figure 3 except for ON/OFF of an ignition signal. Therefore, detailed descriptions of the same parts as those of the scavenging operation method illustrated in figure 3 will be omitted.

In the current embodiment, after a stop instruction is input to stop the engine 12, the controller 40 sends an ignition instruction to the spark plug 28 while the engine speed reduces and while the engine 12 is cranked by the starter motor 29.

According to the current embodiment, since an ignition instruction is sent to the spark plug 28 while the engine speed reduces and while the engine 12 is cranked, fuel remaining around the spark plug 28 can be burnt, and thus the spark plug 28 can be prevented from being stained.

In the example illustrated in figure 3 and the embodiment illustrated in figure 4, during both the period when the engine speed reduces and the period when the engine 12 is cranked, the throttle valve 35 is opened to perform a scavenging operation. However, if a small amount of moisture remains in the cylinder 21, a scavenging operation may be performed during one of the periods. On the contrary, if a large amount of moisture remains in the cylinder 21, the engine 12 may be cranked by the starter motor 29 for a longer time period to increase the amount of air passing through the cylinder 21 and thus to remove the large amount of moisture from the inside of the cylinder 21.

### [Another Example of Gas Engine]

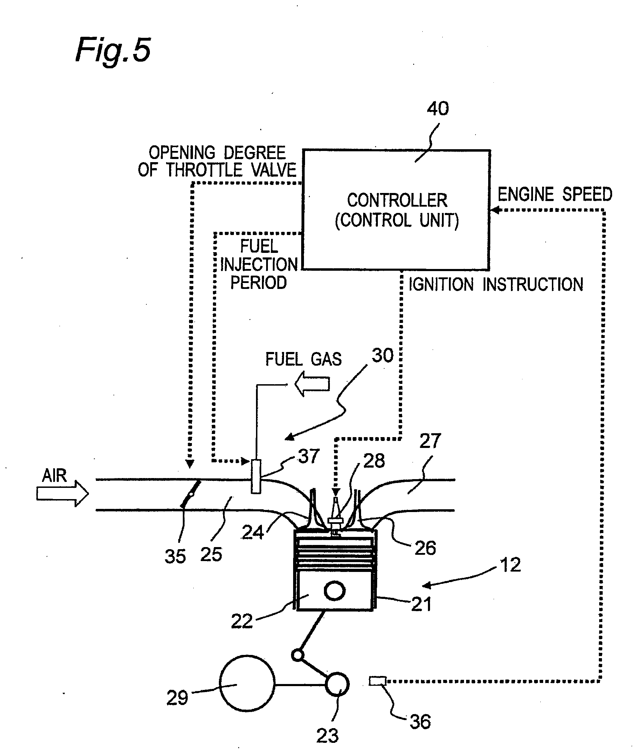

Fig. 5 illustrates a gas engine 12 including an injector 37 as a fuel gas supply device 30, and a throttle valve 35 is disposed at the intake upstream side of the injector 37. The other mechanical structures are the same as those of the mixer type shown in Fig. 2, and the same parts are denoted by the same reference numerals used in Fig. 2.

A scavenging operation method is carried out by controlling the injector 37 in the same way as the way of controlling the fuel control valve 34 shown in Fig. 2. That is, if a stop instruction is input to stop the gas engine 12, a controller 40 closes the injector 37, and then other control procedures are performed as described above.

The scavenging operation method of the present invention can be applied to a 2-cycle engine.

The present invention is not limited to the configurations of the above-described embodiments, but includes various modification examples that could be conceived of by those of ordinary skill in the art without departing from the scope of the present invention as defined in the claims.

### [Industrial Applicability]

A gas engine to which the scavenging operation method of the present invention is applicable can be used in various industrial equipment as well as in the power generation apparatus of the biomass gasification power generation system.

### [Reference Signs List]

- 1: Biomass gasification power generation system
- 2: Feed hopper
- 3: Gasification furnace
- 4: Retention tank
- 5: Cooler
- 6: Bag filter
- 7: Blower
- 12: Gas engine
- 21: Cylinder
- 22: Piston
- 23: Crankshaft
- 24: Intake valve
- 25: Intake path
- 26: Exhaust valve
- 27: Exhaust path
- 28: Spark plug
- 29: Starter motor
- 30: Fuel gas supply device
- 31: Venturi mixer
- 32: Regulator
- 33: Solenoid valve
- 34: Fuel control valve
- 35: Throttle valve
- 36: Engine speed sensor
- 37: Injector
- 40: Controller (control unit)

## Claims

1. A scavenging operation method for a gas engine including: a fuel control valve (34) that controls a supply amount of fuel gas; a throttle valve (35) that controls a supply amount of a mixture gas of fuel gas and air; and a control unit (40), the scavenging operation method comprising:
causing the control unit (40) to close the fuel control valve (34) in response to a stop instruction for stopping the gas engine; and
while engine speed of gas engine decreases after the stop instruction, causing the control unit (40) to open the throttle valve (35) to a predetermined degree of opening or greater; wherein the gas engine includes a starter motor (29), and after the gas engine stops rotating, the scavenging operation method comprises: causing the control unit (40) to open the throttle valve (35) to the predetermined degree of opening or greater while the control unit (40) keeps the fuel control valve (34) closed; and cranking the gas engine using the starter motor (29);
the gas engine includes a spark plug (28) to ignite the mixture gas in a cylinder (21), and
the scavenging operation method comprises causing the control unit (40) to send an ignition instruction to the spark plug (28) while the gas engine is cranked by the starter motor (29).

2. The scavenging operation method according to claim 1, wherein the scavenging operation method comprises causing the control unit (40) to send an ignition instruction to the spark plug (28) while the engine speed of the gas engine decreases after the stop instruction.

3. The scavenging operation method according to claim 1 or 2, comprising causing the control unit (40) to keep the throttle valve (35) open after the gas engine is cranked by the starter motor (29).

## Patentansprüche

1. Spülbetriebsverfahren für einen Gasmotor mit: einem Kraftstoffregelventil (34), das eine Zufuhrmenge an Brenngas regelt; einem Drosselventil (35), das eine Zufuhrmenge eines Gasgemisches aus Brenngas und Luft regelt; und einer Steuereinheit (40), wobei das Spülbetriebsverfahren umfasst:
Veranlassen der Steuereinheit (40) zum Schließen des Kraftstoffregelventils (34) als Reaktion auf einen Stoppbefehl zum Stoppen des Gasmotors; und
während die Motordrehzahl des Gasmotors nach dem Stoppbefehl sinkt, Veranlassen der Steuereinheit (40) zum Öffnen des Drosselventils (35) bis zu einem vorbestimmten Öffnungsgrad oder mehr; wobei der Gasmotor einen Anlasser (29) aufweist und das Spülbetriebsverfahren nach Stoppen des Drehens des Gasmotors umfasst: Veranlassen der Steuereinheit (40) zum Öffnen des Drosselventils (35) bis zum vorbestimmten Öffnungsgrad oder mehr, während die Steuereinheit (40) das Kraftstoffregelventil (34) geschlossen hält; und Anlassen des Gasmotors mittels des Anlassers (29);
der Gasmotor weist eine Zündkerze (28) zum Entzünden des Gasgemisches in einem Zylinder (21) auf; und
das Spülbetriebsverfahren umfasst das Veranlassen der Steuereinheit (40) zum Senden eines Entzündungsbefehls an die Zündkerze (28), während der Gasmotor mittels des Anlassers (29) angelassen wird.

2. Spülbetriebsverfahren nach Anspruch 1, wobei das Spülbetriebsverfahren das Veranlassen der Steuereinheit (40) zum Senden eines Entzündungsbefehls an die Zündkerze (28) umfasst, während die Motordrehzahl des Gasmotors nach dem Stoppbefehl sinkt.

3. Spülbetriebsverfahren nach Anspruch 1 oder 2, welches das Veranlassen der Steuereinheit (40) zum offen Halten des Drosselventils (35) umfasst, nachdem der Gasmotor mittels des Anlassers (29) angelassen wurde.

## Revendications

1. Procédé d'opération de nettoyage pour un moteur à gaz incluant : une soupape de commande de carburant (34) qui commande une quantité d'apport de carburant gazeux ; une soupape d'étranglement (35) qui commande une quantité d'apport d'un mélange gazeux de carburant gazeux et d'air ; et une unité de commande (40), le procédé d'opération de nettoyage comprenant :
le fait d'amener l'unité de commande (40) à fermer la soupape de commande de carburant (34) en réponse à une instruction d'arrêt pour arrêter le moteur à gaz ; et
tandis que la vitesse de moteur du moteur à gaz diminue après l'instruction d'arrêt, le fait d'amener l'unité de commande (40) à ouvrir la soupape d'étranglement (35) jusqu'à un degré d'ouverture prédéterminé ou plus ; où le moteur à gaz inclut un moteur de démarreur (29), et après que le moteur à gaz arrête de tourner, le procédé d'opération de nettoyage comprend : le fait d'amener l'unité de commande (40) à ouvrir la soupape d'étranglement (35) jusqu'au degré d'ouverture prédéterminé ou plus tandis que l'unité de commande (40) maintient la soupape de commande de carburant (34) fermée ; et le démarrage du moteur à gaz au moyen du moteur de démarreur (29) ;
le moteur à gaz inclut une bougie d'allumage (28) pour allumer le mélange gazeux dans un cylindre (21), et
le procédé d'opération de nettoyage comprend le fait d'amener l'unité de commande (40) à envoyer une instruction d'allumage à la bougie d'allumage (28) tandis que le moteur à gaz est démarré par le moteur de démarreur (29).

2. Procédé d'opération de nettoyage selon la revendication 1, où le procédé d'opération de nettoyage comprend le fait d'amener l'unité de commande (40) à envoyer une instruction d'allumage à la bougie d'allumage (28) tandis que la vitesse de moteur du moteur à gaz diminue après l'instruction d'arrêt.

3. Procédé d'opération de nettoyage selon la revendication 1 ou 2, comprenant le fait d'amener l'unité de commande (40) à maintenir la soupape d'étranglement (35) ouverte après le démarrage du moteur à gaz par le moteur de démarreur (29).
